# EUROPÄISCHE PATENTSCHRIFT

(11) **EP 1 577 657 B1**
(45) Veröffentlichungstag und Bekanntmachung des Hinweises auf die Patenterteilung: **28.05.2008**
(21) Anmeldenummer: 05004741.4
(22) Anmeldetag: 03.03.2005
(51) Int. Cl.: G01M 3/02, G01M 3/26, G01M 3/28, G01M 15/00, G01L 23/24, F01N 11/00

(54) **Verfahren und Vorrichtung zur Dichtheitsprüfung einer Abgasanlage**
Method and device for testing the tightness of an exhaust installation
Méthode et dispositif pour tester l'étanchéité d'une installation d'échappement

(30) Priorität: 18.03.2004 DE 102004013435
(43) Veröffentlichungstag der Anmeldung: 21.09.2005
(73) Patentinhaber: Friedrich Boysen GmbH & Co. KG, 72213 Altensteig (DE)
(72) Erfinder: Hanser, Thomas, 94351 Feldkirchen (DE); Geier, Christian, 94574 Wallerfing (DE)
(74) Vertreter: Manitz, Finsterwald & Partner GbR

(56) Entgegenhaltungen:
- EP-A- 0 674 165
- US-A- 4 494 402
- US-A- 5 372 031
- US-A- 5 767 389
- US-A- 5 795 995
- US-A- 6 112 578
- US-A1- 2003 177 820
- US-B1- 6 289 722
- US-B1- 6 497 094

## Beschreibung

Die Erfindung betrifft ein Verfahren zur Dichtheitsprüfung einer Abgasanlage einer Brennkraftmaschine, insbesondere eines Kraftfahrzeugmotors, oder eines Teils hiervon. Die Erfindung betrifft ferner eine entsprechende Vorrichtung.

Bei bekannten Verfahren und Vorrichtungen der genannten Art wird die Abgasanlage oder der Teil hiervon vor dem Einbau in ein Kraftfahrzeug üblicherweise visuell inspiziert und/oder mit Überdruck beaufschlagt, um die Dichtheit insbesondere von Schweißnähten der Abgasanlage zu überprüfen. Dies ist erforderlich, da die Abgasanlage nach außen gasdicht ausgestaltet sein muss, um die gesetzlichen Abgasvorschriften zu erfüllen. Nachteilig bei derartigen Dichtheitsprüfungen ist jedoch, dass die Herstellung der Abgasanlage damit einen zusätzlichen Arbeitsschritt umfasst, der relativ zeitintensiv ist.

Die Dokumente EP-A-0674165, US-A-5372031, US-A-2003/177820, US-A-5767389 und US-A-6112578 beschreiben ein Verfahren und eine Vorrichtung gemäß dem Oberbegriff der Ansprüche 1 und 6.

Der Erfindung liegt die Aufgabe zugrunde, ein Verfahren und eine Vorrichtung der eingangs genannten Art dahingehend weiterzubilden, dass eine einfache und zugleich zeitsparende Dichtheitsprüfung der Abgasanlage oder des Teils hiervon möglich ist, die trotzdem zuverlässige Ergebnisse liefert.

Diese Aufgabe wird für ein Verfahren dadurch gelöst, dass die in der Abgasanlage oder dem Teil hiervon befindliche Luft abgepumpt und der dabei erzeugte Unterdruck überprüft wird, dass das Ergebnis der Überprüfung zur Beurteilung der Dichtheit verwendet wird, und dass Abpumpmittel an eine Seite der Abgasanlage oder des Teils hiervon angeschlossen werden und dass die andere Seite der Abgasanlage oder des Teils hiervon verschlossen wird, insbesondere durch eine einfache, durch den zu erreichenden Unterdruck gehaltene Platte. Hierdurch kann ein besonders effektives Abpumpen der Abgasanlage oder des Teils hiervon gewährleistet werden. Durch die durch den zu erreichenden Unterdruck gehaltene Platte kann die andere Seite der Abgasanlage oder des Teils hiervon auf besonders einfache Weise verschlossen werden.

Das Halten der Platte, insbesondere über eine bestimmte Zeitspanne oder bis zu einem bestimmten Zeitpunkt, wird ebenfalls als Kriterium für die Dichtheit verwendet werden. Bei einem Abfallen der Platte innerhalb der bestimmten Zeitspanne oder vor dem bestimmten Zeitpunkt kann die Abgasanlage oder der Teil hiervon als undicht bewertet werden.

Für eine Vorrichtung wird diese Aufgabe gelöst durch eine Pumpe zum Abpumpen der in der Abgasanlage oder dem Teil hiervon befindlichen Luft, Mitteln zur Feststellung des Unterdrucks in der Abgasanlage oder des Teils hiervon, Mitteln zur Bewertung der Dichtheit anhand des festgestellten Unterdrucks, eine Schnellspanneinrichtung zum Anschließen der Pumpe an eine Seite der Abgasanlage oder des Teils hiervon und eine einfache, durch den zu erreichenden Unterdruck gehaltene Verschlußplatte zum Verschließen der anderen Seite der Abgasanlage oder des Teils hiervon.

Die Erfindung zeichnet sich dadurch aus, dass nicht wie bisher mit Überdruck sondern mit Unterdruck gearbeitet wird. Der zur Bewertung der Dichtheit der Abgasanlage oder des Teils hiervon erzeugte Unterdruck kann insbesondere weitgehend automatisch überprüft werden, so dass die Dichtheitsprüfung mit geringem Personalaufwand durchgeführt werden kann. Das erfindungsgemäße Verfahren erweist sich somit als besonders kostengünstig. Zudem kann die Überprüfung zeitsparend gleichzeitig mit der Montage von Anbauteilen wie Lambdasonden an die Abgasanlage erfolgen.

Ein besonders einfach auszuführendes Verfahren zur Dichtheitsprüfung ergibt sich, wenn das Erreichen eines bestimmten Unterdrucks, insbesondere innerhalb einer bestimmten Zeit, als Kriterium für die Dichtheit verwendet wird. Wird der bestimmte Unterdruck während der bestimmten Zeit erreicht, so kann die Abgasanlage oder der Teil hiervon als ausreichend dicht bewertet werden. Andernfalls kann die Abgasanlage oder der Teil hiervon als undicht bewertet werden. Bei Nichterreichen des bestimmten Unterdrucks innerhalb der bestimmten Zeit wird der Prüfvorgang bevorzugt automatisch abgebrochen.

Insbesondere zusätzlich kann die Aufrechterhaltung eines bestimmten Unterdrucks oder Mindestunterdrucks über eine bestimmte Zeitspanne als Kriterium für die Dichtheit verwendet werden. Dafür kann ein bestimmter Unterdruck oder Mindestunterdruck vorgegeben werden, der bei einer Abgasanlage oder einem Teil hiervon über die bestimmte Zeitdauer eingehalten werden muss, um als dicht qualifiziert zu werden.

Vorzugsweise wird das Abpumpen nach einer bestimmten Zeit oder nach Erreichen eines bestimmten Unterdrucks beendet, die Abgasanlage oder der Teil hiervon verschlossen und die Einhaltung des dabei erreichten Unterdrucks oder eines bestimmten Mindestunterdrucks überwacht.

Zur Übermittlung des Ergebnisses der insbesondere vollautomatischen Dichtheitsprüfung an das Bedienpersonal kann das Einhalten oder Nichteinhalten der geforderten Dichtheit, insbesondere optisch und/oder akustisch, angezeigt werden.

Um die Abgasanlage oder den Teil hiervon wieder in den vor dem Start der Dichtheitsprüfung unterdruckfreien Zustand zu versetzen, wird die Abgasanlage oder der Teil hiervon nach beendetem oder abgebrochenem Prüfvorgang bevorzugt automatisch oder manuell belüftet.

Wenn die Überprüfung gleichzeitig mit anderen Arbeiten, insbesondere während der Montage von Anbauteilen, durchgeführt wird, kann die Gesamtzeit zur Fertigung der Abgasanlage oder des Teils hiervon vorteilhaft reduziert werden. Somit ist ein höherer Durchsatz bei der Herstellung der Abgasanlagen oder des Teils hiervon möglich.

Die erfindungsgemäße Vorrichtung zur Dichtheitsprüfung einer Abgasanlage oder eines Teils hiervon, insbesondere zur Durchführung des vorstehend erwähnten Verfahrens, kann mit Hilfe insbesondere der Mittel zur Bewertung der Dichtheit anhand des festgestellten Unterdrucks weitgehend automatisch betrieben werden.

Eine einfache, durch den zu erreichenden Unterdruck gehaltene Verschlussplatte dient zum Verschließen der anderen Seite der Abgasanlage oder des Teils hiervon. Um eine besonders gute Abdichtung dieser Seite der Abgasanlage oder des Teils hiervon zu gewährleisten, kann die insbesondere aus Aluminium gefertigte Verschlussplatte zur Abdichtung der Abgasanlage oder des Teils hiervon mit einer Auflage aus elastischem Dichtmaterial, insbesondere Gummiauflage, versehen sein.

Zum Öffnen und Schließen der Strömungsverbindung zwischen der Pumpe und der Abgasanlage oder dem Teil hiervon ist bevorzugt ein insbesondere automatisch betätigbares erstes Wegeventil vorgesehen. Hiermit kann diese Seite der Abgasanlage während des Prüfvorgangs abgedichtet werden.

Zum Verstellen des ersten Wegeventils in seine Schließstellung und/oder zum Abschalten der Pumpe bei Erreichen eines bestimmten Unterdrucks kann ein Schalter, insbesondere Druckschalter, vorgesehen sein. Dabei kann der Schaltpunkt des Druckschalters bevorzugt veränderbar sein.

Zum Belüften der Abgasanlage oder des Teils hiervon ist bevorzugt ein manuell und/oder automatisch betätigbares zweites Wegeventil vorgesehen.

Zum Abbrechen des Prüfvorgangs kann ein ebenfalls manuell und/oder automatisch betätigbares Schaltelement vorgesehen sein. Das Schaltelement wird insbesondere dann betätigt, wenn der Prüfvorgang wegen Nichterreichen des vorgegebenen Unterdrucks vorzeitig abgebrochen werden soll.

Zum Messen einer Zeit für das Erreichen eines bestimmten Unterdrucks und/oder einer Zeitspanne für die Aufrechterhaltung eines bestimmten Unterdrucks oder Mindestunterdrucks ist bevorzugt eine Zeitmesseinrichtung vorgesehen. Die Zeitmesseinrichtung wird insbesondere bei Beginn des Abpumpvorgangs oder bei Beendigung des Abpumpvorgangs und Erreichen des vorgegebenen Unterdrucks gestartet.

Nach einer besonderen Ausgestaltung der Erfindung sind Mittel zum Einstellen der für das Erreichen und/oder die Aufrechterhaltung eines bestimmten Unterdrucks oder Mindestunterdrucks bestimmten Zeit oder Zeitspanne vorgesehen. Nach einer weiteren Ausgestaltung der Erfindung können auch Mittel zum Einstellen des innerhalb einer bestimmten Zeit zu erreichenden Unterdrucks und/oder des über eine bestimmte Zeitspanne aufrecht zu erhaltenden Unterdrucks oder Mindestunterdrucks vorgesehen sein. Dies ermöglicht jeweils, dass der Prüfvorgang an unterschiedliche Abgasanlagen oder Teile hiervon mit unterschiedlichen Anforderungen an die Dichtheit angepasst werden kann.

Zur Anzeige des Ergebnisses der Dichtheitsprüfung sind bevorzugt optische und/oder akustische Anzeigemittel, insbesondere verschieden farbige Lampen, vorgesehen. Beispielsweise kann das Ergebnis des Prüfvorgangs in Abhängigkeit von der Beurteilung der Dichtheit durch eine grüne Freigabelampe bei Erfüllung der Dichtheitsanforderungen oder durch eine rote Warnlampe bei Nichterfüllen angezeigt werden.

Ein nicht beschränkendes Ausführungsbeispiel der Erfindung ist in der Zeichnung dargestellt und wird nachfolgend beschrieben. Es zeigen, jeweils in schematischer Darstellung,
- Fig. 1: eine Draufsicht auf eine Abgasanlage eines Kraftfahrzeugmotors mit Teilen einer erfindungsgemäßen Prüfvorrichtung, und
- Fig. 2: ein Blockschaltbild einer erfindungsgemäßen Vorrichtung zur Dichtheitsprüfung einer Abgasanlage.

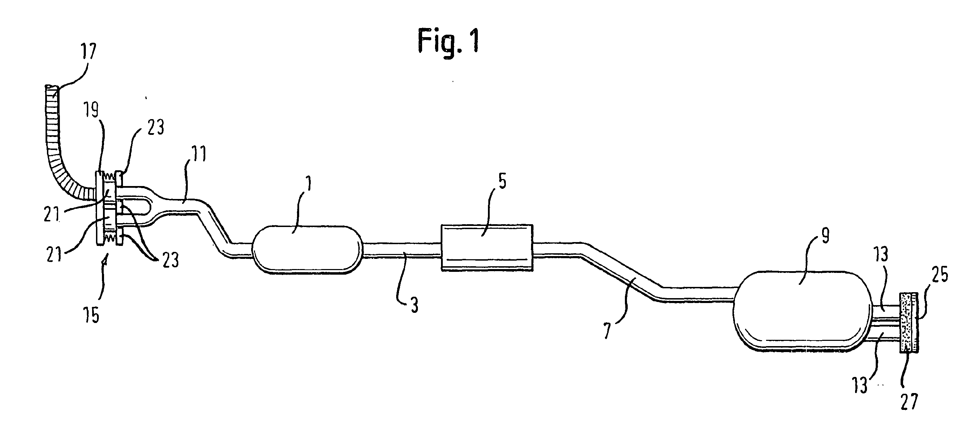

Die in Fig. 1 dargestellte, auf Dichtheit zu prüfende Abgasanlage umfasst einen Katalysator 1, einen mittels eines Abgasrohrs 3 mit dem Katalysator 1 verbundenen Mittelschalldämpfer 5 und einen ebenfalls mittels eines Abgasrohrs 7 mit dem Mittelschalldämpfer 5 verbundenen Nachschalldämpfer 9.

Der Katalysator 1 ist zur Verbindung mit einem Kraftfahrzeugmotor an einen motorseitig zweiflutig ausgebildeten Auspuffkrümmer 11 angeschlossen. Zur Abführung der die Abgasanlage durchströmenden Abgase nach außen ist der Nachschalldämpfer 9 mit zwei Endrohren 13 versehen. Die Abgasanlage muss auf ihrer ganzen Länge gasdicht sein, damit die gesetzlichen Abgasvorschriften erfüllt werden können.

Der Auspuffkrümmer 11 ist über eine Schnellspanneinrichtung 15 mit einem Schlauch 17 verbunden, der mit einer in Fig. 1 nicht dargestellten Pumpe zum Abpumpen der in der Abgasanlage befindlichen Luft in Strömungsverbindung steht, wobei die Schnellspanneinrichtung 15 den Auspuffkrümmer 11 abgaseintrittsseitig luftdicht mit dem Schlauch 17 verbindet.

Hierzu weist die Schnellspanneinrichtung 15 eine Abdeckplatte 19 auf, die an zwei Flansche 21 des in diesem Bereich zweiflutig ausgeführten Auspuffkrümmers 11 angelegt ist. Die Abdeckplatte 19 wird durch drei an der Schnellspanneinrichtung 15 vorgesehene Finger 23 gehalten, die die Flansche 21 des Auspuffkrümmers 11 umgreifen und in der Funktionsstellung durch Federkraft in Richtung auf die Abdeckplatte 17 gedrängt werden.

Die beiden Endrohre 13 der Abgasanlage sind abgasaustrittsseitig mit einer einfachen, aus Aluminium gefertigten Verschlussplatte 25 verschlossen, die lediglich durch den in der Abgasanlage erzeugten Unterdruck gehalten wird. Die Aluminiumplatte 25 ist mit einer Gummiauflage 27 versehen, in die die beiden Endrohre 13 eingedrückt werden, so dass eine luftdichte Abdichtung der Endrohre 11 der Abgasanlage gewährleistet ist.

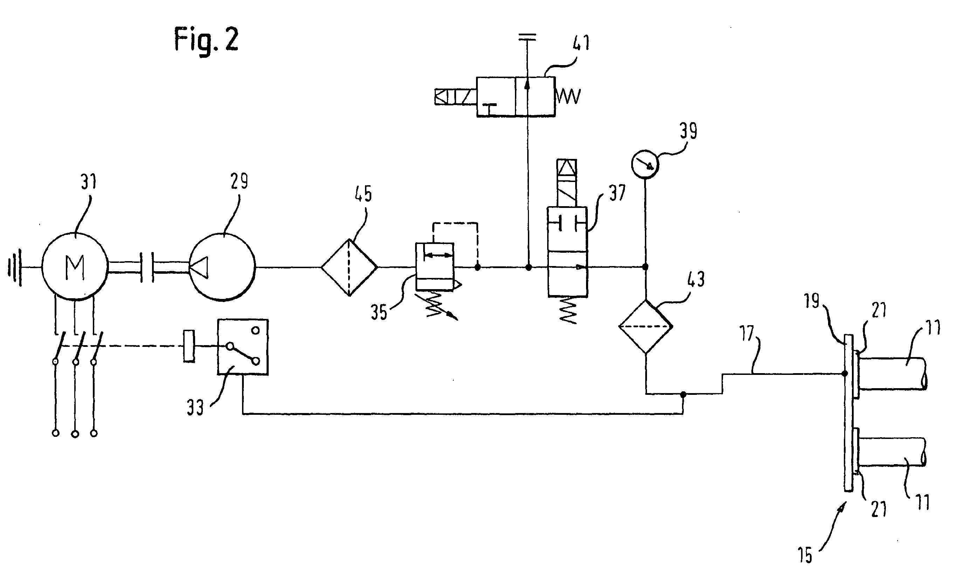

Wie sich aus Fig. 2 ergibt, umfasst die erfindungsgemäße Vorrichtung eine Vakuumpumpe 29 zum Abpumpen der in der Abgasanlage befindlichen Luft. Die Pumpe 29 wird durch einen Motor 31 angetrieben, der durch einen Druckschalter 33 bei Erreichen eines bestimmten Unterdrucks abgeschaltet werden kann. Zur Regelung der Leistung der Pumpe 29 ist zwischen der Pumpe 29 und dem Auspuffkrümmer 11 der Abgasanlage ein Regler 35 angeordnet.

Zwischen dem Regler 35 und dem Auspuffkrümmer 11 ist ein automatisch betätigbares erstes Wegeventil 37 angeordnet, das zum Öffnen und Schließen der Strömungsverbindung zwischen der Pumpe 29 und der Abgasanlage vorgesehen ist. Das erste Wegeventil 37 kann durch den Druckschalter 33 oder durch nicht dargestellte Mittel zur Bewertung der Dichtheit, beispielsweise eine Steuereinheit, betätigt werden. In der Schließstellung des ersten Wegeventils 37 ist die Strömungsverbindung zwischen der Pumpe 29 und der Abgasanlage unterbrochen.

Zwischen dem ersten Wegeventil 37 und dem Auspuffkrümmer 11 ist ein Druckmesser 39 angeordnet, der den Druck, insbesondere Unterdruck, in der Abgasanlage feststellt.

Zum Belüften der Abgasanlage ist ein zweites Wegeventil 41 vorgesehen, das an die Strömungsverbindung zwischen dem Regler 35 und dem ersten Wegeventil 37 angeschlossen ist. Befinden sich beide Wegeventile 37, 41 jeweils in ihrer geöffneten Stellung, so ist die die Abgasanlage mit der umgebenden Atmosphäre verbunden. Das zweite Wegeventil 41 kann sowohl manuell als auch automatisch betätigt werden.

Zum Schutz insbesondere der Vakuumpumpe 29, des Reglers 35 und der beiden Wegeventile 37, 41 ist zwischen dem ersten Wegeventil und der Abgasanlage ein Filter 43 angeordnet. Zusätzlich ist unmittelbar vor der Pumpe 29 ein weiterer Filter 45 in die Vorrichtung zur Dichtheitsprüfung eingesetzt.

Nachfolgend wird ein erfindungsgemäßes Verfahren zur Dichtheitsprüfung einer Abgasanlage einer Brennkraftmaschine insbesondere unter Bezugnahme auf Fig. 2 beschrieben:

Zunächst wird der Schlauch 17, der mit der Pumpe 29 in Strömungsverbindung steht, mittels der Schnellspanneinrichtung 15 an das abgaseintrittsseitige Ende der Abgasanlage, den Auspuffkrümmer 11, angeschlossen. An das abgasaustrittsseitige Ende, die beiden Endrohre 13, wird die Verschlussplatte 25 angelegt.

Das erste Wegeventil 37 ist geöffnet, so dass eine Strömungsverbindung zwischen der Abgasanlage und der Pumpe 29 besteht. Das zweite Wegeventil 41 hingegen befindet sich in seiner Schließstellung, so dass durch dieses keine Luft von außen in die Abgasanlage eindringen kann.

Danach wird die erste Phase des Prüfvorgangs gestartet. Die Vakuumpumpe 29 wird eingeschaltet, so dass die in der Abgasanlage befindliche Luft durch den Schlauch 17 abgepumpt wird. In der Abgasanlage entsteht ein Unterdruck, der die mit der Gummiauflage 27 versehene Verschlussplatte 25 an die beiden Endrohre 13 zieht, so dass diese wirksam verschlossen sind.

Der durch das Abpumpen in der Abgasanlage erzeugte Unterdruck wird mittels des Druckmessers 39 und einer nicht dargestellten Steuereinheit nun dahingehend überprüft, ob ein bestimmter Unterdruck, der vorher festgelegt wurde, innerhalb einer bestimmten Zeit, die ebenfalls vorher festgelegt wurde, erreicht wird. Zum Messen der Zeit ist eine nicht dargestellte Zeitmesseinrichtung vorgesehen.

Wird der bestimmte Unterdruck innerhalb der bestimmten Zeit nicht erreicht, so wird der Prüfvorgang durch die Steuereinheit automatisch abgebrochen. Die Pumpe 29 wird abgeschaltet und das zweite Wegeventil 41 wird geöffnet, so dass die Abgasanlage automatisch belüftet wird. Die Abgasanlage wird in diesem Fall als nicht ausreichend dicht bewertet. Das Nichteinhalten der geforderten Dichtheit wird mittels einer nicht dargestellten roten Warnlampe angezeigt.

Andernfalls schaltet der Druckschalter 33 nach Erreichen des bestimmten Unterdrucks die Pumpe 29 ab und das zweite Wegeventil 37 wird verschlossen. Das Abpumpen wird somit beendet und die Abgasanlage vollständig verschlossen. In der sich nun anschließenden zweiten Phase des Prüfvorgangs wird mittels des Druckmessers 39 überprüft, ob der in der Abgasanlage erzeugte Unterdruck derart aufrechterhalten wird, dass er über eine vorher festgelegte Zeitspanne nicht unter einen ebenfalls vorher festgelegten Mindestunterdruck abfällt bzw. dass der Druck in der Abgasanlage nicht über den festgelegten Mindestunterdruck steigt. Zum Messen der Zeitspanne ist wiederum die Zeitmesseinrichtung vorgesehen.

Fällt der Unterdruck in der Abgasanlage über die Zeitspanne unter den Mindestunterdruck, so erfüllt die Abgasanlage die Anforderungen an die Dichtheit nicht. Dies wird mittels der roten Warnlampe angezeigt. Fällt der Unterdruck in der Abgasanlage über die Zeitspanne jedoch nicht unter den Mindestunterdruck, so wird das Einhalten der geforderten Dichtheit mittels einer nicht dargestellten grünen Freigabelampe angezeigt. Damit ist der Prüfvorgang beendet und die Abgasanlage wird automatisch belüftet.

Auch dann wird die Abgasanlage als nicht ausreichend dicht bewertet, wenn die Verschlussplatte 25 während des Prüfvorgangs durch den Unterdruck nicht mehr gehalten werden kann und von den Endrohren 13 der Abgasanlage abfällt.

Der vorstehend erläuterte Prüfvorgang kann jederzeit mittels eines nicht dargestellten manuell betätigbaren Pilztasters vorzeitig abgebrochen und die Abgasanlage wieder belüftet werden. Auch kann der Prüfvorgang auf Wunsch oder automatisch ein zweites Mal durchgeführt werden.

Um zu gewährleisten, dass der Prüfvorgang flexibel an verschiedene Abgasanlagen angepasst werden kann, sind nicht dargestellte Mittel vorgesehen, mittels derer die Zeit für das Erreichen des bestimmten Unterdrucks der ersten Phase des Prüfvorgangs und die Zeitspanne für die Aufrecherhaltung des Mindestunterdrucks der zweiten Phase des Prüfvorgangs festgelegt werden. Beispielsweise kann für eine für einen Dieselmotor bzw. für einen Benzinmotor vorgesehene Abgasanlage die Zeit für das Erreichen des bestimmten Unterdrucks 6 s bzw. 7 s und die Zeitspanne für die Aufrechterhaltung des Mindestunterdrucks 7 s bzw. 8 s betragen.

Ebenso sind zu diesem Zweck nicht dargestellte Mittel vorgesehen, mittels derer der innerhalb der bestimmten Zeit zu erreichende Unterdruck der ersten Phase des Prüfvorgangs und der über die bestimmte Zeitspanne aufrecht zu erhaltende Mindestunterdruck der zweiten Phase des Prüfvorgangs festgelegt werden. Der zu erreichende Unterdruck kann beispielsweise einem Druck von 0,300 mbar und der aufrecht zu erhaltende Mindestunterdruck kann einem Druck von 0,600 mbar entsprechen.

Schließlich können auch Mittel zur Dokumentation der Prüfergebnisse vorgesehen sein.

### Bezugszeichenliste

- 1: Katalysator
- 3: Abgasrohr
- 5: Mittelschalldämpfer
- 7: Abgasrohr
- 9: Nachschalldämpfer
- 11: Auspuffkrümmer
- 13: Endrohr
- 15: Schnellspanneinrichtung
- 17: Schlauch
- 19: Abdeckplatte
- 21: Flansch
- 23: Finger
- 25: Verschlussplatte
- 27: Gummiauflage
- 29: Pumpe
- 31: Motor
- 33: Druckschalter
- 35: Regler
- 37: erstes Wegeventil
- 39: Druckmesser
- 41: zweites Wegeventil
- 43: Filter
- 45: Filter

## Patentansprüche

1. Verfahren zur Dichtheitsprüfung einer Abgasanlage einer Brennkraftmaschine, insbesondere eines Kraftfahrzeugmotors, oder eines Teils hiervon, bei welchem die in der Abgasanlage oder dem Teil hiervon befindliche Luft abgepumpt, der dabei erzeugte Unterdruck überprüft und das Ergebnis der Überprüfung zur Beurteilung der Dichtheit verwendet wird,
**dadurch gekennzeichnet,**
**dass** Abpumpmittel (29) an eine Seite der Abgasanlage oder des Teils hiervon angeschlossen werden und dass die andere Seite der Abgasanlage oder des Teils hiervon durch eine einfache, durch den zu erreichenden Unterdruck gehaltene Platte (25) verschlossen wird, wobei das Halten der Platte (25), insbesondere über eine bestimmte Zeitspanne oder bis zu einem bestimmten Zeitpunkt, als Kriterium für die Dichtheit verwendet wird.

2. Verfahren nach Anspruch 1,
**dadurch gekennzeichnet,**
**dass** der Prüfvorgang bei Nichterreichen des bestimmten Unterdrucks innerhalb einer bestimmten Zeit abgebrochen wird.

3. Verfahren nach einem der vorhergehenden Ansprüche,
**dadurch gekennzeichnet,**
**dass** das Einhalten oder Nichteinhalten der geforderten Dichtheit, insbesondere optisch und/oder akustisch, angezeigt wird.

4. Verfahren nach einem der vorhergehenden Ansprüche,
**dadurch gekennzeichnet,**
**dass** die Abgasanlage oder der Teil hiervon nach beendetem oder abgebrochenem Prüfvorgang automatisch oder manuell belüftet wird.

5. Verfahren nach einem der vorhergehenden Ansprüche,
**dadurch gekennzeichnet,**
**dass** die Überprüfung gleichzeitig mit anderen Arbeiten, insbesondere während der Montage von Anbauteilen, durchgeführt wird.

6. Vorrichtung zur Dichtheitsprüfung einer Abgasanlage einer Brennkraftmaschine, insbesondere eines Kraftfahrzeugmotors, oder eines Teils hiervon, insbesondere zur Durchführung des Verfahrens nach Anspruch 1, mit einer Pumpe (29) zum Abpumpen der in der Abgasanlage oder dem Teil hiervon befindlichen Luft, Mitteln (39) zur Feststellung des Unterdrucks in der Abgasanlage oder des Teils hiervon und Mitteln zur Bewertung der Dichtheit anhand des festgestellten Unterdrucks, wobei eine Schnellspanneinrichtung (15) zum Anschließen der Pumpe (29) an eine Seite der Abgasanlage oder des Teils hiervon vorgesehen ist,
**dadurch gekennzeichnet,**
**dass** eine einfache, durch den zu erreichenden Unterdruck gehaltene Verschlussplatte (25) zum Verschließen der anderen Seite der Abgasanlage oder des Teils hiervon vorgesehen ist.

7. Vorrichtung nach Anspruch 6,
**dadurch gekennzeichnet,**
**dass** die insbesondere aus Aluminium gefertigte Verschlussplatte (25) bevorzugt zur Abdichtung der anderen Seite der Abgasanlage oder des Teils hiervon mit einer Auflage (27) aus elastischem Dichtmaterial, insbesondere Gummiauflage, versehen ist und/oder dass ein insbesondere automatisch betätigbares erstes Wegeventil (37) zum Öffnen und Schließen der Strömungsverbindung zwischen der Pumpe (29) und der Abgasanlage oder dem Teil hiervon vorgesehen ist, wobei ein Schalter (33), insbesondere Druckschalter, zum Verstellen des ersten Wegeventils (37) in seine Schließstellung und zum Abschalten der Pumpe (29) bei Erreichen eines bestimmten Unterdrucks vorgesehen ist.

8. Vorrichtung nach Anspruch 6 oder 7,
**dadurch gekennzeichnet,**
**dass** ein manuell und/oder automatisch betätigbares zweites Wegeventil (41) zum Belüften der Abgasanlage oder des Teils hiervon vorgesehen ist und/oder dass ein manuell und/oder automatisch betätigbares Schaltelement zum Abbrechen des Prüfvorgangs vorgesehen ist.

9. Vorrichtung nach einem der Ansprüche 6 bis 8,
**dadurch gekennzeichnet,**
**dass** eine Zeitmesseinrichtung zum Messen einer Zeit für das Erreichen eines bestimmten Unterdrucks und/oder einer Zeitspanne für die Aufrechterhaltung eines bestimmten Unterdrucks oder Mindestunterdrucks vorgesehen ist, wobei Mittel zum Einstellen einer für das Erreichen und/oder die Aufrechterhaltung eines bestimmten Unterdrucks oder Mindestunterdrucks bestimmten Zeit oder Zeitspanne vorgesehen sind.

10. Vorrichtung nach einem der vorhergehenden Ansprüche,
**dadurch gekennzeichnet,**
**dass** Mittel zum Einstellen eines innerhalb einer bestimmten Zeit zu erreichenden Unterdrucks und/oder eines über eine bestimmte Zeitspanne aufrecht zu erhaltenden Unterdrucks oder Mindestunterdrucks vorgesehen sind und/oder dass zur Anzeige des Ergebnisses der Dichtheitsprüfung optische und/oder akustische Anzeigemittel, insbesondere verschieden farbige Lampen, vorgesehen sind.

## Claims

1. A method for the testing of the leak tightness of an exhaust gas system of an internal combustion engine, in particular of a motor vehicle engine, or of a part thereof, wherein the air located in the exhaust gas system or in the part thereof is pumped out, the underpressure produced in this process is checked and the result of the check is used for the evaluation of the leak tightness,
**characterised in that**
pumping out means (29) are connected to a side of the exhaust gas system or of the part thereof; and **in that** the other side of the exhaust gas system or of the part thereof is closed by a simple plate (25) held by the underpressure to be reached, with the holding of the plate (25), in particular over a specific time period or up to a specific point in time, being used as a criterion for the leak tightness.

2. A method in accordance with claim 1, **characterised in that** the test procedure is aborted if the specific underpressure is not reached within a specific time.

3. A method in accordance with any one of the preceding claims, **characterised in that** the keeping or not keeping of the required leak tightness is displayed, in particular visually and/or acoustically.

4. A method in accordance with any one of the preceding claims, **characterised in that** the exhaust gas system or the part thereof is deaerated automatically or manually after the terminated or aborted test procedure.

5. A method in accordance with any one of the preceding claims, **characterised in that** the check is carried out simultaneously with other work, in particular during the fitting of mounted parts.

6. An apparatus for the checking of the leak tightness of an exhaust gas system of an internal combustion engine, in particular of a motor vehicle engine, or of a part thereof, in particular for the carrying out of the method in accordance with claim 1, comprising a pump (29) for the pumping out of the air located in the exhaust gas system or in the part thereof, means (39) for the determination of the underpressure in the exhaust gas system or in the part thereof and means for the evaluation of the leak tightness with reference to the determined underpressure, with a fast-clamping device (15) being provided for the connection of the pump (29) to a side of the exhaust gas system or of the part thereof,
**characterised in that**
a simple closing plate (25) held by the underpressure to be reached is provided for the closing of the other side of the exhaust gas system or of the part thereof.

7. An apparatus in accordance with claim 6, **characterised in that** the closing plate (25), which is in particular made of aluminium, is preferably provided with a support (27) made of elastic sealing material, in particular a rubber support, for the sealing of the other side of the exhaust gas system or of the part thereof; and/or **in that** a first direction control valve (37), which can in particular be actuated automatically, is provided for the opening and closing of the flow connection between the pump (29) and the exhaust gas system or the part thereof, with a switch (33), in particular a pressure switch, being provided for the adjustment of the first direction control valve (37) into its closed position and for the switching off of the pump (29) when a specific underpressure is reached.

8. An apparatus in accordance with claim 6 or claim 7, **characterised in that** a manually and/or automatically actuable second direction control valve (41) is provided for the deaeration of the exhaust gas system or of the part thereof; and/or **in that** a manually and/or automatically actuable switching element is provided for the aborting of the test procedure.

9. An apparatus in accordance with any one of the claims 6 to 8, **characterised in that** a time measuring device is provided for the measurement of a time for the reaching of a specific underpressure and/or of a time period for the maintenance of a specific underpressure or minimum underpressure, with means being provided for the setting of a specific time or time period for the reaching and/or for the maintenance of a specific underpressure or of a minimum underpressure.

10. An apparatus in accordance with any one of the preceding claims, **characterised in that** means are provided for the setting of an underpressure to be reached within a specific time and/or of an underpressure to be maintained over a specific time period; and/or in that visual and/or acoustic display means, in particular differently coloured lamps, are provided for the display of the results of the test of the leak tightness.

## Revendications

1. Procédé pour tester l'étanchéité d'une installation de gaz d'échappement d'un moteur à combustion interne, en particulier d'un moteur de véhicule automobile, ou d'une partie de ladite installation, dans lequel l'air situé dans l'installation de gaz d'échappement ou dans une partie de celle-ci est évacué par pompage, la dépression ainsi établie est contrôlée et le résultat du contrôle est utilisé pour juger quant à l'étanchéité,
**caractérisé en ce que**
l'on raccorde des moyens de pompage (29) à un côté de l'installation de gaz d'échappement ou de la partie de celle-ci, et **en ce que** l'on obture l'autre côté de l'installation de gaz d'échappement ou de la partie de celle-ci par une plaque simple (25) maintenue par la dépression à atteindre, le maintien de la plaque (25), en particulier pendant une période temporelle déterminée ou jusqu'à un instant déterminé, étant utilisé comme critère de l'étanchéité.

2. Procédé selon la revendication 1,
**caractérisé en ce que**
l'on interrompt l'opération de test si l'on n'atteint pas une dépression déterminée dans un délai déterminé.

3. Procédé selon l'une des revendications précédentes,
**caractérisé en ce que**
le maintien ou le non-maintien de l'étanchéité requise est affiché en particulier par voie optique et/ou acoustique.

4. Procédé selon l'une des revendications précédentes,
**caractérisé en ce que**
l'on met à l'air automatiquement ou manuellement l'installation de gaz d'échappement ou la partie de celle-ci après avoir achevé ou interrompu l'opération de test.

5. Procédé selon l'une des revendications précédentes,
**caractérisé en ce que**
l'on procède au contrôle simultanément avec d'autres travaux, en particulier pendant le montage de pièces à rapporter.

6. Dispositif pour tester l'étanchéité d'une installation de gaz d'échappement d'un moteur à combustion interne, en particulier d'un moteur de véhicule automobile, ou d'une partie de ladite installation, en particulier pour mettre en oeuvre le procédé selon la revendication 1, comportant une pompe (29) pour évacuer par pompage l'air situé dans l'installation de gaz d'échappement ou dans une partie de celle-ci, des moyens (39) pour constater la dépression dans l'installation de gaz d'échappement ou dans la partie de celle-ci, et des moyens pour juger quant à l'étanchéité en se basant sur la dépression constatée, un dispositif de serrage rapide (15) étant prévu pour raccorder la pompe (29) à un côté de l'installation de gaz d'échappement ou de la partie de celle-ci,
**caractérisé en ce que**
il est prévu une plaque d'obturation (25) simple maintenue par la dépression à atteindre et destinée à obturer l'autre côté de l'installation de gaz d'échappement ou de la partie de celle-ci.

7. Dispositif selon la revendication 6,
**caractérisé en ce que**
la plaque d'obturation (25) fabriquée en particulier en aluminium est pourvue d'un support (27) en matériau d'étanchement élastique, en particulier en caoutchouc, de préférence pour étancher l'autre côté de l'installation de gaz d'échappement ou de la partie de celle-ci, et/ou **en ce qu'**il est prévu un premier distributeur (37) à actionnement automatique en particulier, destiné à ouvrir et à fermer la liaison d'écoulement entre la pompe (29) et l'installation de gaz d'échappement ou la partie de celle-ci, un interrupteur (33), en particulier un interrupteur manométrique étant prévu pour déplacer le premier distributeur (37) jusque dans sa position de fermeture et pour arrêter la pompe (29) lorsqu'une dépression déterminée est atteinte.

8. Dispositif selon la revendication 6 ou 7,
**caractérisé en ce que**
il est prévu un second distributeur (41) à actionnement manuel et/ou automatique pour mettre à l'air l'installation de gaz d'échappement ou la partie de celle-ci, et/ou **en ce qu'**il est prévu un élément interrupteur à actionnement manuel et/ou automatique pour interrompre l'opération de test.

9. Dispositif selon l'une des revendications 6 à 8,
**caractérisé en ce que**
il est prévu un dispositif chronométrique pour mesurer une durée pour atteindre une dépression déterminée et/ou une période temporelle pour maintenir une dépression déterminée ou une dépression minimale, des moyens étant prévus pour régler une durée ou une période temporelle déterminée pour atteindre et/ou maintenir une dépression déterminée ou une dépression minimale.

10. Dispositif selon l'une des revendications précédentes,
**caractérisé en ce que**
il est prévu des moyens pour régler une dépression à atteindre dans un certain délai et/ou une dépression à maintenir pendant une période temporelle déterminée ou une dépression minimale et/ou **en ce que** pour afficher le résultat du test d'étanchéité, il est prévu des moyens d'affichage optiques et/ou acoustiques, en particulier des lampes de différentes couleurs.
